# EUROPEAN PATENT APPLICATION

(11) **EP 1 486 861 A2**
(43) Date of publication of application: **15.12.2004**
(21) Application number: 03029305.4
(22) Date of filing: 18.12.2003
(51) Int. Cl.: G06F 3/033

(54) **Image selection for variable documents**

(30) Priority: 10.06.2003 US 458098
(71) Applicant: Hewlett-Packard Development Company, L.P., Houston, TX 77070 (US)
(72) Inventor: Udom, Charlie, Albany, OR 97322 (US); Gu, James, Corvallis, OR 97330 (US)
(74) Representative: Schoppe, Fritz, Dipl.-Ing.

(57) **Abstract**

A system (610) that facilitates selection of images for a variable document provides a browser based display (100) of a form for variable document. The form has a field (120) for indicating an address for an image to be inserted, and a browse button (125) next to the field. A popup window (130) is invoked via the browse button (125). The popup window (130) contains links identifying storage locations of multiple images and provides thumbnails (134) of such images for selection. When selected, an address corresponding to the storage location of the image is inserted into the field (120), and the popup window (130) is closed.

## Description

### Field of the Invention

The present invention relates to variable documents, and in particular to image selection for variable documents.

### Background of the Invention

Variable documents are documents that can be easily customized for individual recipients. Some variable documents allow identification of objects to insert into documents when the documents are generated from a variable document template. Objects include text, spreadsheets, images and other elements that can be inserted into a document. The documents can also be easily personalized by tying fields in the variable document database fields.

Several methods have been used for identifying images for variable documents. In one method, a pull-down menu is used to identify available images. The images are identified by a word or phrase, but a user is unable to see what the image looks like. In an alternative, small thumbnail images are displayed on a form page for the variable document. Each thumbnail image has a checkbox or radio button associated with it. However, increasing the number of images increases the size of the form, detracting from the usability of the form. It is also possible to directly type an address such as a uniform resource locator (URL) into the form to identify an image.

### Brief Description of the Drawings

The following drawings are various representations of embodiments of the invention. Other embodiments are within the scope of the claims herein.
- FIG. 1: is a screen shot representation of selection of images for a variable document according to an embodiment of the invention.
- FIG. 2: is a screen shot representation of the variable document of FIG. 1 following selection of an image according to an embodiment of the invention.

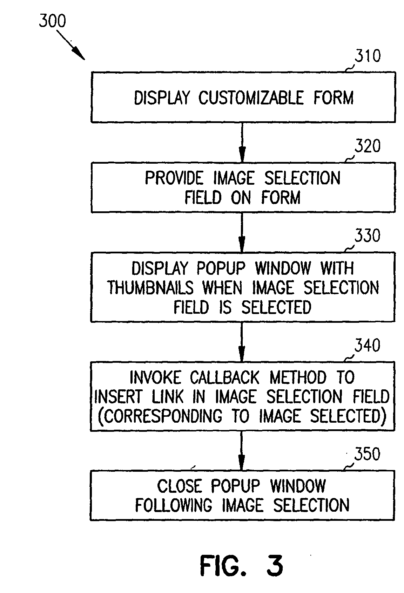

- FIG. 3: is a flowchart of a process for selecting images for a variable document according to an embodiment of the invention.

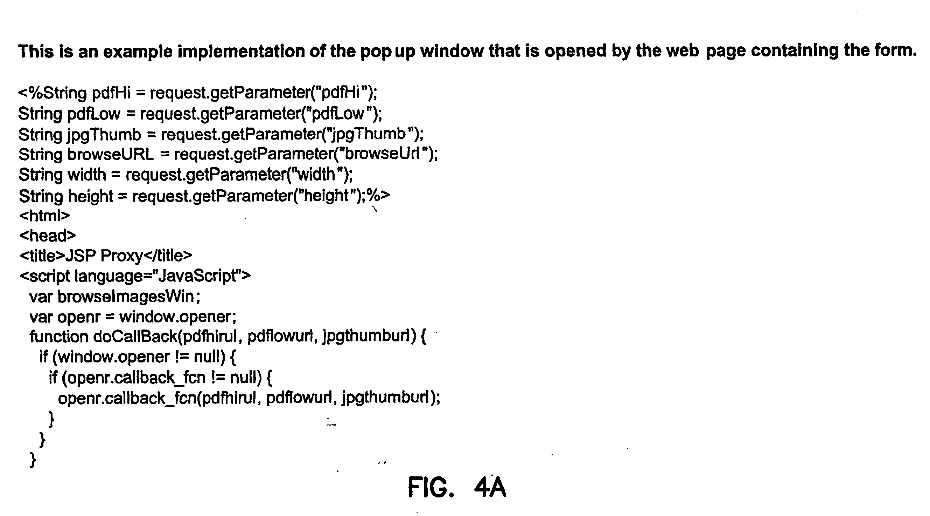

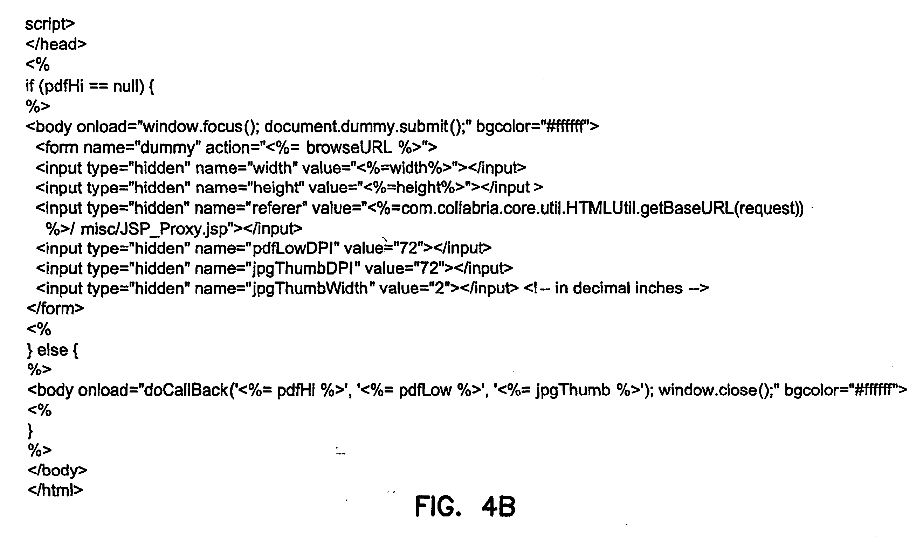

- FIG. 4: is an example of instructions for implementing a pop-up window for the selection of images according to an embodiment of the invention.

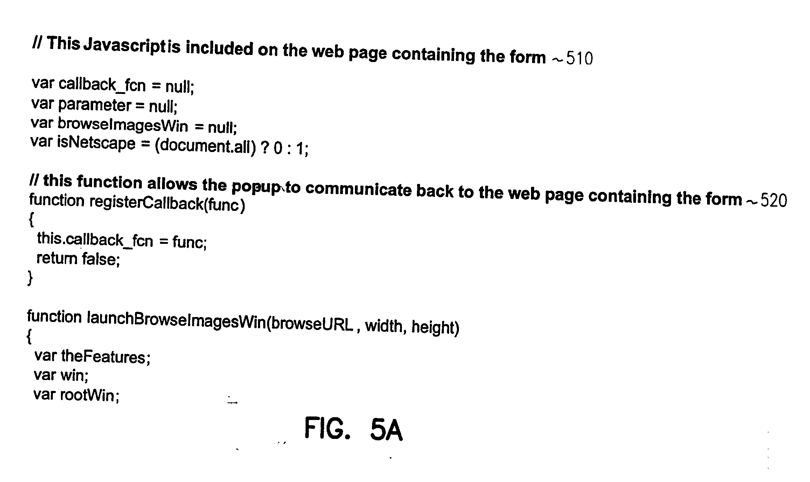

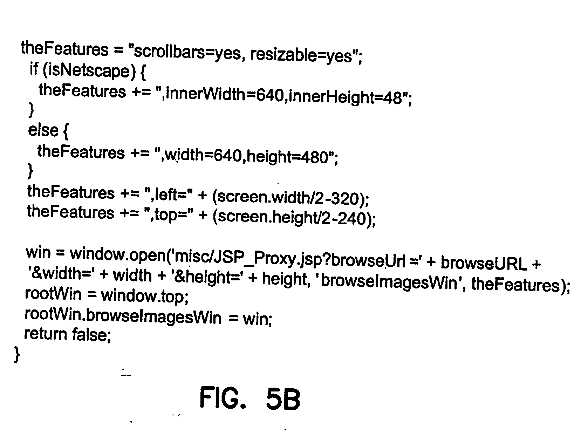

- FIG. 5: is an example of instructions for a callback method for inserting links to images in a variable document according to an embodiment of the invention.
- FIG. 6: is a block diagram of a typical computer system for performing selected functions related to image selection for a variable document according to an embodiment of the invention.

### Detailed Description of the Invention

In the following description and the drawings illustrate specific embodiments of the invention sufficiently to enable those skilled in the art to practice it. Other embodiments may incorporate structural, logical, electrical, process, and other changes. Examples merely typify possible variations. Individual components and functions are optional unless explicitly required, and the sequence of operations may vary. Portions and features of some embodiments may be included in or substituted for those of others. The scope of the invention encompasses the full ambit of the claims and all available equivalents. The following description is, therefore, not to be taken in a limited sense, and the scope of the present invention is defined by the appended claims.

The functions described herein are implemented in software in one embodiment, where the software comprises computer executable instructions stored on computer readable media such as memory or other type of storage devices. In further embodiments, some of the functions are performed by users. The term "computer readable media" is also used to represent carrier waves on which the software is transmitted. Further, such functions correspond to modules, which are software, hardware, firmware or any combination thereof. Multiple functions are performed in one or more modules as desired, and the embodiments described are merely examples.

In one embodiment of the invention, a pop-up window is provided in a form to assist in the selection of images for a variable document. Screen shots are used in this description to illustrate the process of selecting a document, followed by a flowchart of the process. Some examples of instructions for implementing the process are also provided along with a description of an example computer system for implementing the process.

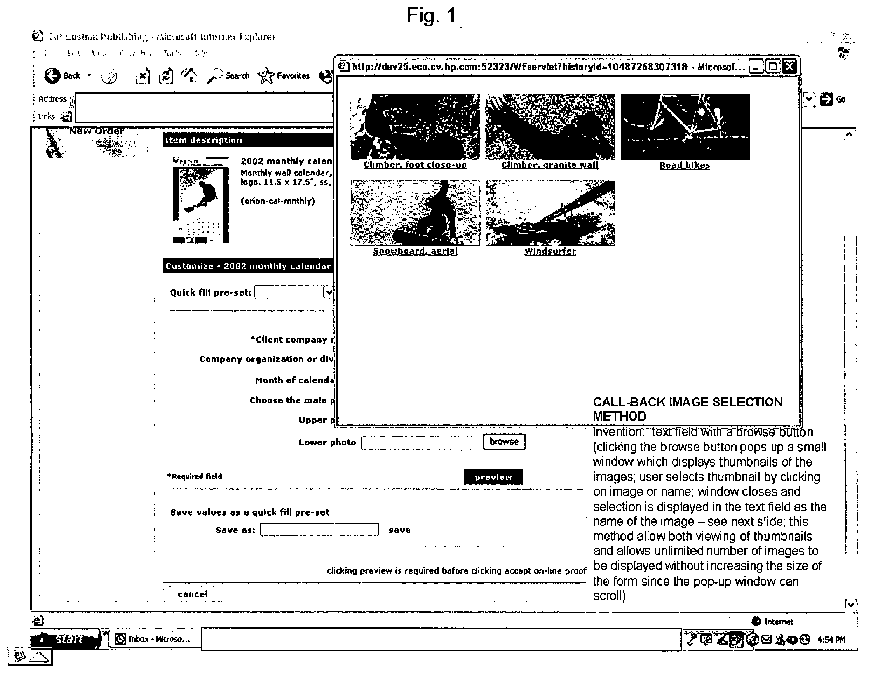

FIG. 1 shows a screen shot 100 of a variable document template or form 110. The form 110 is a hypertext markup language (html) form in one embodiment and is presented in a window of a browser, such as an Internet browser. In this example, the form 110 is for the generation of customized monthly calendars as identified at 115. Multiple fields are provided for allowing customization of the calendar. One such field is identified as a lower photo field 120. An address for a photo or image may be directly entered in this field if desired. A browse button 125 or other selection mechanism is visually associated with the field, and may be selected by a user through the use of a pointing device or other input device. When selected, a pop-up window 130 is provided. The pop-up window 130 contains several thumbnail images of photos available for insertion into the variable document.

The thumbnail images may be stored locally, or may be obtained from a library located anywhere on a network such as the Internet. When in a library, the pop-up window contains a frame that points to a website containing the library. The pop-up window then accesses the library directly to obtain the thumbnail images and a link or uniform resource locater "URL" for each image in the library. The pop-up window may also allow searching and scrolling, such that large numbers of images may be provided for selection without affecting the size of the form. In one embodiment, the links may contain role and permission information that can be used to restrict the list of images that the user can browse or select.

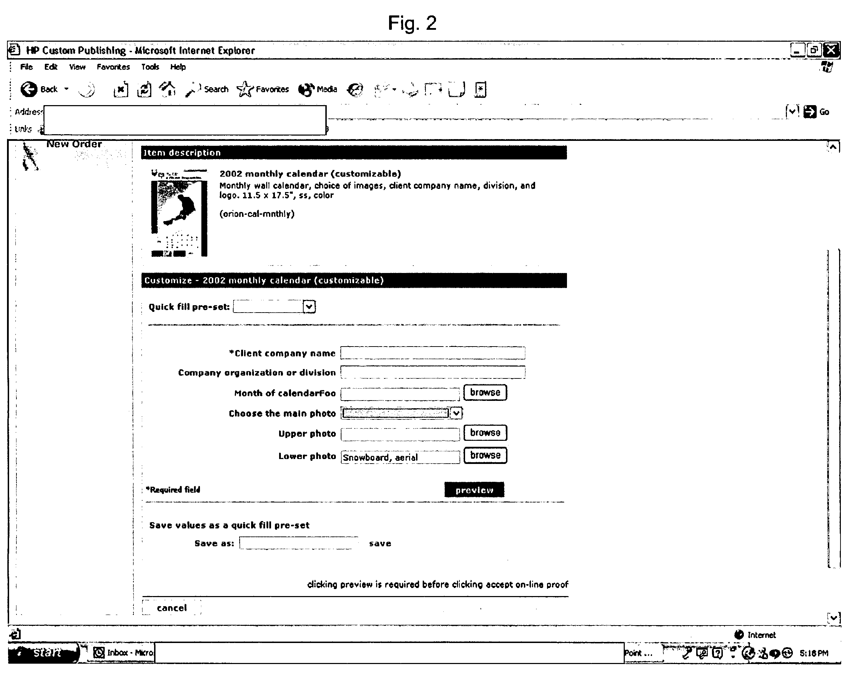

In one example, a user-selected photo 134, entitled "Snowboard, aerial" is selected by the user. The selection is performed by clicking on the image or name. As seen in FIG. 2, which is a screen shot of the variable document template or form 110 of FIG. 1, the pop-up window 130 has been closed, and the title of the photo has been entered into the field 120 for the lower photo. The title is a link or URL in one embodiment, or any other type of address that identifies the photo. A callback method is invoked on selection of the photo, which causes the link to be inserted back into the corresponding field. The callback method also closes the pop-up window 130.

A flowchart 300 illustrates a process for enabling a user to select images for a variable document. At 310, a customizable form is displayed on a display device, such as an liquid crystal display (LCD) or cathode ray tube (CRT) coupled to a computer. The form may be provided by a server and displayed in a browser on a personal computer or a web enabled appliance or the like. At 320, an image selection field with a button or other means for indicating that an image may be selected is displayed as part of the form. When the user selects the image selection field, a pop-up window is displayed at 330. The pop-up window has one or more thumbnail images therein. Thumbnail images are basically lower resolution, or smaller format representations of an actual image. They are provided as a convenient way to preview an image without downloading the entire image. In further embodiments, entire images may also be loaded into the pop-up window if desired.

When a user selects an image in the pop-up window, a method, such as a callback method is invoked at 340. The callback method in one embodiment is a JavaScript callback application programming interface (API). It inserts a link, such as a URL into the image selection field that corresponds to the image selected, and closes the pop-up window at 350.

FIG.s 4A and 4B provide an example implementation of instructions for causing the opening of a pop-up window. The pop-up window is opened by a web-page containing a variable document form. The example provides various formatting for the pop-up window to be opened, and specifies a URL for thumbnail images to be displayed in the pop-up window. This example is written in JavaScript. Height and width of the thumbnail images are specified, and the callback method is initialized and specified.

FIG.s 5A and 5B illustrate interaction between the web page containing the form beginning at 510, and communication from the pop-up window to the web page containing the form beginning at 520. The web page containing the form defines variables for callback functions. The callback method is the bridge between the variable document form page and the pop-up thumbnail browsing page. When it invokes the callback function, the pop-up window provides the URL of the selected image along with the user-friendly name. The user-friendly name will appear in the variable form, and the URL will be stored in the hidden variable.

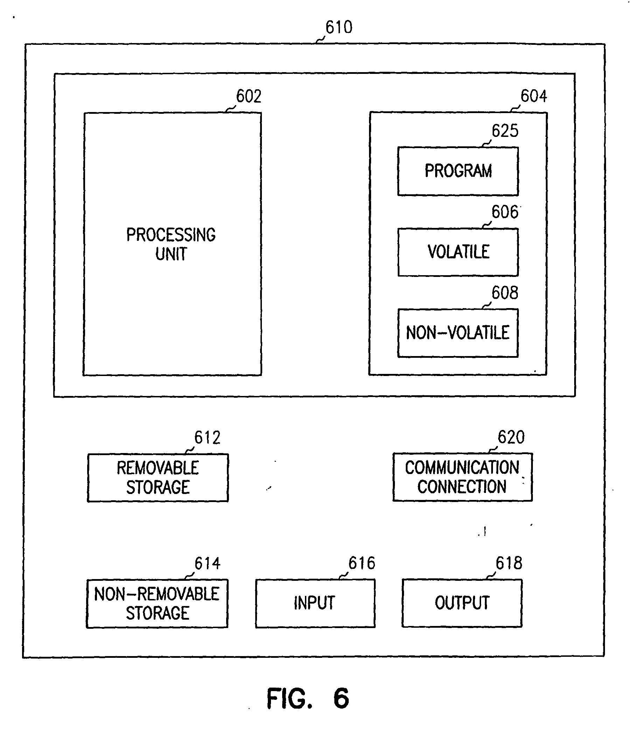

A block diagram of a computer system that executes programming for performing the above functions is shown in FIG. 6. A general computing device in the form of a computer 610, may include a processing unit 602, memory 604, removable storage 612, and non-removable storage 614. Memory 604 may include volatile memory 606 and non-volatile memory 608. Computer 610 may include - or have access to a computing environment that includes - a variety of computer-readable media, such as volatile memory 606 and non-volatile memory 608, removable storage 612 and non-removable storage 614. Computer storage includes random access memory (RAM), read only memory (ROM), erasable programmable read-only memory (EPROM) & electrically erasable read-only memory (EEPROM), flash memory or other memory technologies, compact disk read-only memory (CD ROM), digital versatile disks (DVD) or other optical disk storage, magnetic cassettes, magnetic tape, magnetic disk storage or other magnetic storage devices, or any other medium capable of storing computer-readable instructions. Computer 610 may include or have access to a computing environment that includes input 616, output 618, such as a display device, and a communication connection 620. The computer may operate in a networked environment using a communication connection to connect to one or more remote computers. The remote computer may include a personal computer, server, router, network personal computer (PC), a peer device or other common network node, or the like. The communication connection may include a Local Area Network (LAN), a Wide Area Network (WAN) or other networks.

Computer-readable instructions stored on a computer-readable medium are executable by the processing unit 602 of the computer 610. A hard drive, CD-ROM, and RAM are some examples of articles including a computer-readable medium. For example, a computer program 625 capable of providing a generic technique to perform access control check for data access and/or for doing an operation on one of the servers in a COM based system according to the teachings of the present invention may be included on a CD-ROM and loaded from the CD-ROM to a hard drive. The computer-readable instructions allow computer system 600 to provide generic access controls in a COM based computer network system having multiple users and servers.

While embodiments have been described using the Internet as a network, other networks may also be used in further embodiments. Languages other than html may be used, as well as different addressing mechanisms, such as the use of real, virtual and indirect addressing.

## Claims

1. A system for selecting images for a variable document, the system comprising:
an image insert interface (110) that allows a user to indicate a desire to insert an image;
a popup window (130) invoked via the interface (110), wherein the popup window (130) contains links (134) identifying a storage location of multiple images; and
wherein the popup window (130) contains thumbnails (134) of such images for selection.

2. The system of claim 1 and further comprising a call back method (340) that is called when a user selects a thumbnail.

3. The system of claim 2 wherein the call back method (340) comprises a Javascript callback application programming interface (API).

4. The system of claim 2 wherein the call back method (340) populates the variable document with links of selected images.

5. The system of claim 1 wherein the popup window (130) is independently scrollable.

6. A computer implemented method of enabling selection of images for a variable document, the method comprising:
providing an image insert interface (320) to a user that allows the user to indicate a desire to insert an image;
displaying a popup window (330) invoked via the image insert interface, wherein the popup window contains links identifying a storage location for each of multiple images;
providing thumbnails (330) of such images for selection in the popup window; and
inserting a link (340) corresponding to a user selected image into the variable document.

7. The method of claim 6 wherein the link is inserted by using a call back method (340).

8. The method of claim 7 wherein the call back method comprises a Javascript callback application programming interface (API).

9. The method of claim 6 wherein the call back method populates the variable document with links of selected images.

10. The method of claim 6 wherein the multiple images are stored in a library having a library link comprising a uniform resource locator (URL) containing user role and permission indications.
